# EUROPÄISCHE PATENTSCHRIFT

(11) **EP 1 935 719 B1**
(45) Veröffentlichungstag und Bekanntmachung des Hinweises auf die Patenterteilung: **27.01.2010**
(21) Anmeldenummer: 07150093.8
(22) Anmeldetag: 18.12.2007
(51) Int. Cl.: B60R 1/06

(54) **Spiegelhalterung für einen Fahrzeugaußenspiegel sowie Fahrzeugaußenspiegel mit einer solchen Spiegelhalterung**
Mirror holder for an automobile wing mirror and automobile wing mirror with such a mirror holder
Fixation de miroir pour un rétroviseur de véhicule ainsi que rétroviseur de véhicule doté d'une telle fixation de miroir

(30) Priorität: 22.12.2006 DE 202006019379 U
(43) Veröffentlichungstag der Anmeldung: 25.06.2008
(73) Patentinhaber: MEKRA Lang GmbH & Co. KG, 90765 Fürth (DE)
(72) Erfinder: Meier, Markus, 91478, Markt Nordheim (DE); Pfanz, Jürgen, 91583, Schillingfürst (DE); Popp, Albrecht, 91629, Weihenzell (DE); Deffner, Simon, 91604, Flachslanden (DE); Lang, Werner, 91465 Ergersheim (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-B- 1 531 084
- WO-A-2005/009717
- DE-A1-102005 053 002
- US-A- 2 860 546
- US-A- 3 322 388

## Beschreibung

Die vorliegende Erfindung betrifft eine Spiegelhalterung für Fahrzeugaußenspiegel, insbesondere für Nutzfahrzeuge, sowie einen Fahrzeugaußenspiegel mit einer solchen Spiegelhalterung.

Fahrzeugspiegel nach dem Stand der Technik umfassen wenigstens einen Spiegelkopf, der seinerseits wenigstens eine Spiegelscheibe umfasst. Diese Spiegelscheibe kann fest oder verstellbar in einem Gehäuse angeordnet oder direkt in einem Rahmen befestigt sein. Gegebenenfalls sind im Gehäuse weiters eine Verstelleinrichtung zum motorischen Verstellen der Spiegelscheibe gegenüber dem Gehäuse, Heizelemente zum Beheizen des Spiegel oder dergleichen aufgenommen.

In einer einfachen Variante wird ein solcher Spiegelkopf an einem im wesentlichen U-förmig gebogenen metallischen Rohrbügel befestigt, der seinerseits an seinen beiden Enden an am Fahrzeug befestigten Lagerböcken befestigt wird. In der EP 0 090 909 A3 ist beispielsweise die Verstelleinrichtung mittels Klemmung an dem Rohrbügel festgelegt. In der EP 0 590 510 B1 ist das Gehäuse selbst mittels Klemmung an dem Rohrbügel festgelegt. Der Rohrbügel seinerseits kann an am Fahrzeug befestigten Lagerböcken angelenkt sein. Hierzu schlägt die EP 0 697 311 B1 vor, an dem metallischen Rohrbügel Lagerbuchsen aus Kunststoff zu befestigen, die ihrerseits mit den Lagerböcken eine Rastverzahnung zur Wnkelverstellung des Rohrbügels bilden.

Bei der US-A 3 322 388 kann der C-förmige Rohrbügel mittels unterschiedlichen Befestigungsvorrichtungen - unten Klemmschraube und oben Rastelement - in drei unterschiedlichen Stellungen fixiert an dem Fahrzeug fixiert werden. Bei der WO 2005/009717 A1 umfasst der C-förmige Rohrbügel unten und oben horizontal verlaufende und dazwischen einen vertikal verlaufenden geraden Rohrabschnitt. An dem geraden Rohrabschnitt ist der Spiegelkopf montiert. Zur Stabilisierung greift an dem oberen horizontalen Rohrabschnitt eine Querstrebe an, die sich an dem Fahrzeug abstützt.

Obwohl diese Konstruktionen sehr stabil-und einfach sind, weisen sie eine Reihe von Nachteilen auf: Zum einen ist die Spiegelscheibe (über das Gehäuse bzw. die Verstelleinrichtung) nur reibschlüssig drehfestgelegt. Zum anderen ist der Aufbau aerodynamisch unvorteilhaft, was Fahrtwiderstand und Beanspruchung durch Windkräfte nachteilig erhöht. Der aus Festigkeitsgründen komplett metallische Rohrbügel ist auch schwer. Schließlich sind mit den zusätzlichen Lagerbuchsen aus Kunststoff eine Vielzahl von Einzelteilen erforderlich, was nicht nur die Herstellung, sondern auch die Monatage aufwendig und teuer macht.

Die EP 1 024 051 A2 schlägt hierzu einen einstückigen Tragarm mit zwei Haltearmen und einem diese verbindenden Anschlussteil vor. Am Anschlussteil des vollständig aus Kunststoff gefertigten Tragarms kann die Tragplatte eines Spiegelgehäuses mittels komplementärer Befestigungsvorrichtungen fixiert werden. In gleicher Weise schlägt die EP 1 013 502 A1 eine Rückspiegelanordnung mit einem Trägerkörper aus Kunststoff zur Aufnahme einer Spiegelscheibe vor, der einstückig mit zwei Hohlarmen ausgebildet ist.

Auch diese Konstruktion weist eine Reihe von Nachteilen auf: Zum einen können Spiegelgehäuse, die für die oben beschriebenen Rohrbügelversionen konzipiert sind, nicht an dem Tragarm befestigt werden. Es müssen also stets mehrere Gehäusebaureihen bevorratet werden. Auch können Gehäuse der Rohrbügelversion bei einem "Upgrade" zu dem aerodynamisch günstigeren und leichteren Kunststofftragarm nicht weiterverwendet werden. Umgekehrt können an diesem Tragarm keine Spiegelscheiben mit Rahmen, also ohne Gehäuse, befestigt werden.

Darüber hinaus ist die Festigkeit des vollständig aus Kunststoff gefertigten Tragarms begrenzt, so dass ein daran befestigter Spiegel windinduzierten oder vom Fahrzeug übertragenen Vibrationen verstärkt ausgesetzt ist. Um die eingeschränkte Festigkeit von Spiegelhalterungen aus Kunststoff zu verbessern, schlägt die EP 1 531 084 B1 vor, die Halterung zumindest im Bereich des/der Spiegelkopfes/Spiegelköpfe als Metallrohr auszubilden.

Zur Befestigung des Spiegelkopfes an dem Spiegelkopfhaltearm ist auch bei der Spiegelhalterung nach der EP 1 531 084 B1 eine entsprechend konfigurierte Befestigung nötig, so dass es nicht, wie beispielsweise bei der oben beschriebenen Rohrbügelversion durch einfaches Verdrehen, möglich ist, die selben Tragarme für rechts- und linksgesteuerte Fahrzeuge zu verwenden. Während der in Fahrtrichtung linke (rechte) Außenspiegel bei linksgesteuerten Fahrzeugen der Fahrerspiegel (Beifahrerspiegel) ist und daher weniger (mehr) um die Hochachse des Fahrzeugs verdreht ist, ist dies bei rechtsgesteuerten Fahrzeugen gerade umgekehrt. Daher - müssen bislang stets vier Varianten (FahrerspiegeUBeifahrerspiegel für rechts-/linksgesteuert) bevorratet werden. Hierzu schlägt die DE 295 04 245 U1 vor, zwischen Spiegelfuß und Spiegelgehäuse nachträglich ein zusätzliches Adapterteil zu montieren, das das Gehäuse gegenüber dem Fuß in unterschiedlichen Winkeln fixiert. Dazu ist jedoch ein zusätzliches Teil notwendig, was nicht nur Gewicht, Fertigungs- und Montageaufwand erhöht, sondern zusätzliche Vibrationsquetten einfährt.

Aufgrund von Design-Anforderungen können die Spiegelhalterungen nicht mehr als einfache Rohrbügel ausgebildet werden, sondern weisen eine Form auf, wie dies aus der EP 1 531 084 A1 bekannt ist. Auch unterscheidet sich aufgrund Design-Anforderungen der obere und der untere Haltearm voneinander, z. B. sind beide Haltearme geschwungen und/oder aerodynamisch geformt. Dies führt dazu, dass für ein Fahrzeug mit linkem und rechtem Außenspiegel schon vier verschiedene Haltearme erforderlich sind. Je nachdem, wie die unterschiedlichen Winkelstellungen der an dem Spiegelkopfhaltearmen montierten Spiegelköpfe realisiert sind, verdoppeln sich die Varianten für die Spiegelhalterungen für Links- und Rechtslenker auf acht.

Aus der US-A-2 860 546 ist eine Spiegelhalterung bekannt, die aus verschiedenen miteinander verbundenen Rohrelementen besteht. Hierbei sind das obere und das untere Rohrelement, die den oberen und den unteren Haltearm bilden identisch ausgebildet. Die Befestigung dieser Spiegelhalterung an dem Fahrzeug erfolgt über Drehgelenke und Querstreben. Die Querstreben greifen an einem Ende an dem oberen bzw. dem unteren Haltearm am anderen Ende lassen sie sich in verschiedenen Position an dem Fahrzeug fixieren.

Ausgehend von der US-A-2 860 546 ist es daher eine Aufgabe der vorliegenden Erfindung, eine linke oder rechte Spiegelhalterung für einen Fahrzeugaußenspiegel zu schaffen, bei der für Links- und Rechtslenker weniger Ausführungsvarianten notwendig sind und bei der eine Winkelstellung des Spiegels rasch und unkompliziert einstellbar ist. Weiter ist es Aufgabe der vorliegenden Erfindung einen linken oder rechten Fahrzeugaußenspiegel mit einer solchen Spiegelhalterung anzugeben.

Die Lösung dieser Aufgabe erfolgt durch die Merkmal des Anspruch 1 bzw. 14.

Ausgehend von den Befestigungselementen für den oberen und untern Haltearm sind die Drehpunkte am Fahrzeug am oberen und unteren Befestigungselement so festzulegen, dass ein gleicher Abstand und gleicher Winkel zwischen dem oberen und dem unteren Haltearm zum Spiegelkopf erzielt wird. Zusätzlich wird der Spiegelkopf so an den Spiegelkopfhaltearm befestigt, dass zwischen der oberen Befestigung und der unteren Befestigung gleiche Verhältnisse vorliegen, d.h. dass eine symmetrische Anordnung erzielt wird. Dadurch, dass der obere Haltearm einer linken Spiegelhalterung identisch mit dem unteren Haltearm einer rechten Spiegelhalterung ist, und dass der unter Haltearm einer linken Spiegelhalterung identisch mit dem oberen Haltearm einer rechten Spiegelhalterung ist, wird ein vernünftiger Kompromiss zwischen Designfreiheit und Herstellungskosten erzielt. Somit sind für Links- und Rechtslenker nur zwei unterschiedliche Varianten der Spiegelhalterung notwendig. Damit können die Kosten für die Herstellung deutlich reduziert werden, da nur für zwei unterschiedliche Spiegelhalterungen Werkzeuge erforderlich sind. Ebenso müssen nur zwei unterschiedliche Spiegelhalterungen hergestellt und disponiert werden. Die Rastgelenke ermöglichen mit einem einfachen und kompakten Aufbau eine einfache Verstellung des Spiegels.

In Ausnahmefällen, wenn die Anforderungen an das Design nicht so hoch sind, ist es auch möglich den unteren und oberen Haltearm identisch zu gestalten - Anspruch 2.

Gemäß einer vorteilhaften Ausgestaltung bestehen der obere und der untere . Haltearm aus Kunststoff - Anspruch 4, während der Spiegelkopfhaltearnn aus Metall ist - Anspruch 6 - und insbesondere als Hohlprofil und als Aluminium-Strangpressprofil - Anspruch 7, 8 und 9 - ausgeführt ist. Dies stellt einen guten Kompromiss zwischen Herstellungskosten und Festigkeit dar. '

Gemäß einer vorteilhaften Ausgestaltung umfasst das Strangpressprofil wenigstens eine erste Längsnut, mittels der das Strangpressprofil bezüglich dem oberen und dem unteren Haltearm drehgesichert ist, so dass das notwendige Drehmoment von dem Strangpressprofil und einem daran montierten Spiegelkopf auf die Haltearme übertragen wird. Im gleichen Zug wird über diese Längsnut die Winkellage des Strangpressprofils zu den Haltearmen festgelegt. Zur Vergrösserung des übertragbaren Drehmoments werden vorteilhaft zwei oder mehr Längsnuten im Strangpressprofil vorgesehen. Dadurch, dass diese Längsnuten nicht rotationssymmetrisch zueinander liegen, wird erreicht, dass der Spiegelkopf nicht verdreht montiert werden kann. Längsnuten können auf einfache Weise in einem Strangpressprofil hergestellt werden - Ansprüche 10 und 11.

Vorzugsweise sind in wenigstens einer Längsnut eine Mehrzahl von Längsrillen eingebracht, die aufgrund ihrer Teilung eine exakte Winkelposition des Spiegelkopfes festlegen und augrund ihrer Mehrzahl unterschiedliche Winkelstellungen des Spiegelkopfes an den Aluminium-Strangpressprofil bzw. den Spiegelkopfhaltearm exakt festlegen - Ansprüche 12 und 13.

Die weiteren Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer bevorzugten Ausführungsform anhand der Zeichnungen.

Es zeigt:
- Fig. 1: eine Ansicht einer beispielhaften Ausführungsform der Erfindung als linke Spiegelhalterung entgegen der Fahrtrichtung betrachtet bzw. bei Drehung um 180° die rechte Spiegelhalterung gegen die Fahrtrichtung betrachtet;
- Fig. 2: eine Ansicht der Spiegelhalterung nach Fig. 1 schräg von oben bzw. unten;
- Fig. 3: einen beispielhaften linken Fahrzeugaußenspiegel entgegen der Fahrtrichtung betrachtet mit einer Spiegelhalterung nach Fig. 1 und 2;
- Fig. 4: den linken Fahrzeugaußenspiegel nach Fig. 3 mit abgenommener Spiegelkopfabdeckung;
- Fig. 5a: und 5b zeigen Schnitte entlang der Linien A-A bzw. B-B in Fig. 4; und
- Fig. 6: eine Detaildarstellung des Spiegelkopfhaltearms mit Längsnut und Rillen zur Festlegung unterschiedlicher Winkelstellungen des Spiegelkopfes.

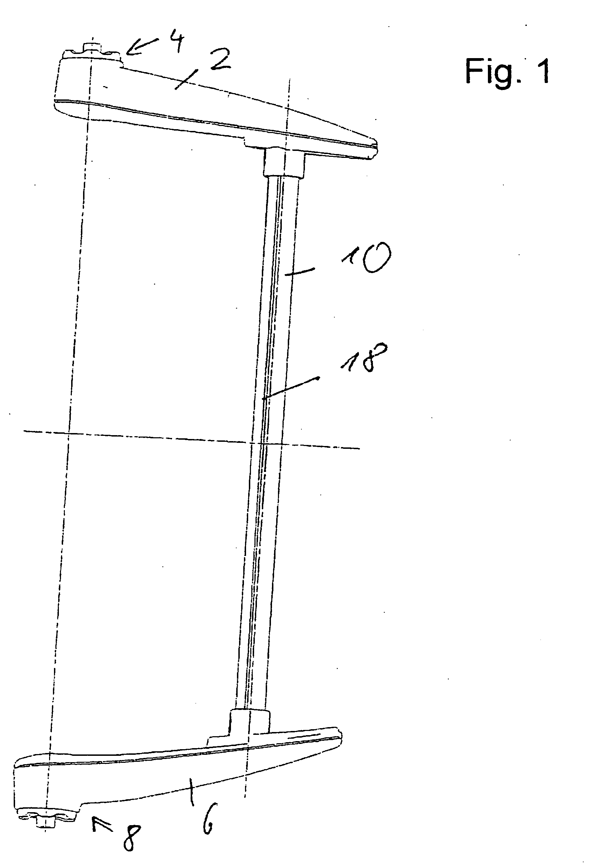

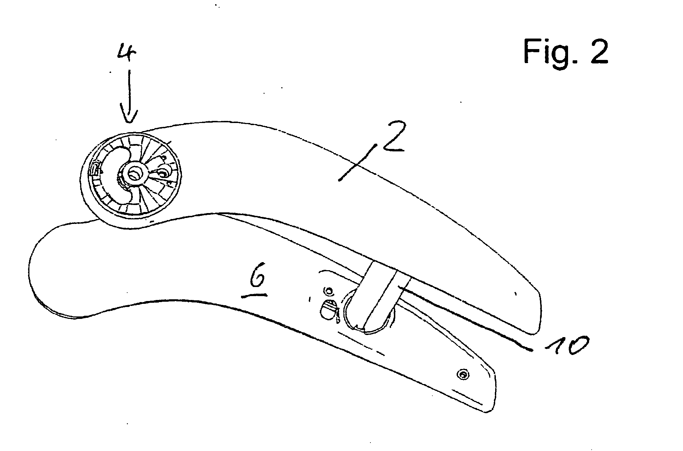

Die in Fig. 1 und 2 dargestellte linke oder rechte Spiegelhalterung umfasst einen oberen Haltearm 2. Der obere Haltearm 2 weist an seinem fahrzeugseitigem Ende ein oberes Befestigungselement 4 zur Befestigung an einem nicht dargestellten Fahrzeug auf. Weiter umfasst die in Fig. 1 bzw. 2 dargestellte Spiegelhalterung einen unteren Haltearm 6, der an seinem fahrzeugseitigen Ende ebenfalls mit einem unteren Befestigungselement 8 zur Befestigung an dem nicht näher dargestellten Fahrzeug versehen ist. Das oberen und das untere Befestigungselement 4 bzw. sind als Rastgelenk ausgebildet, wobei in Fig. 1 bzw. 2 lediglich ein Teil des Rastgelenks dargestellt ist.

Der obere Haltearm 2 und der untere Haltearm 6 sind über einen geraden Spiegelkopfhaltearm 10 fest miteinander verbunden, der als Hohlprofil ausgebildet ist. Der Spiegelkopfhaltearm 10 ist ein Aluminium-Strangpressprofil. Das Aluminium-Strangpressprofil 10 ist mit seinen beiden Stirnenden so in den oberen bzw. unteren Haltearm 2 bzw. 6 eingepresst und verschraubt, so dass die beiden Enden vollständig von Kunststoff umschlossen sind.

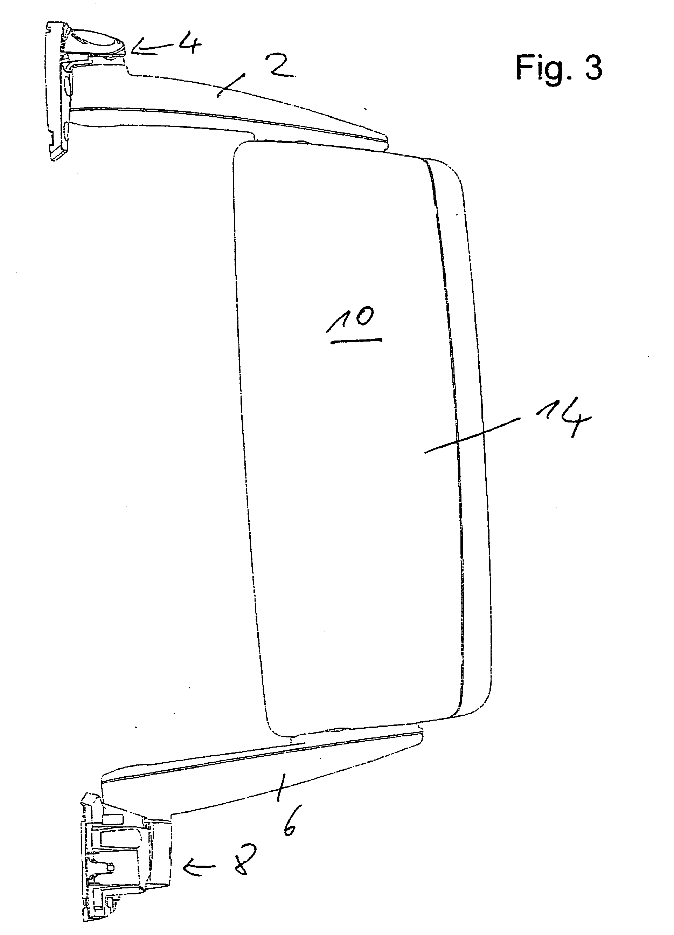

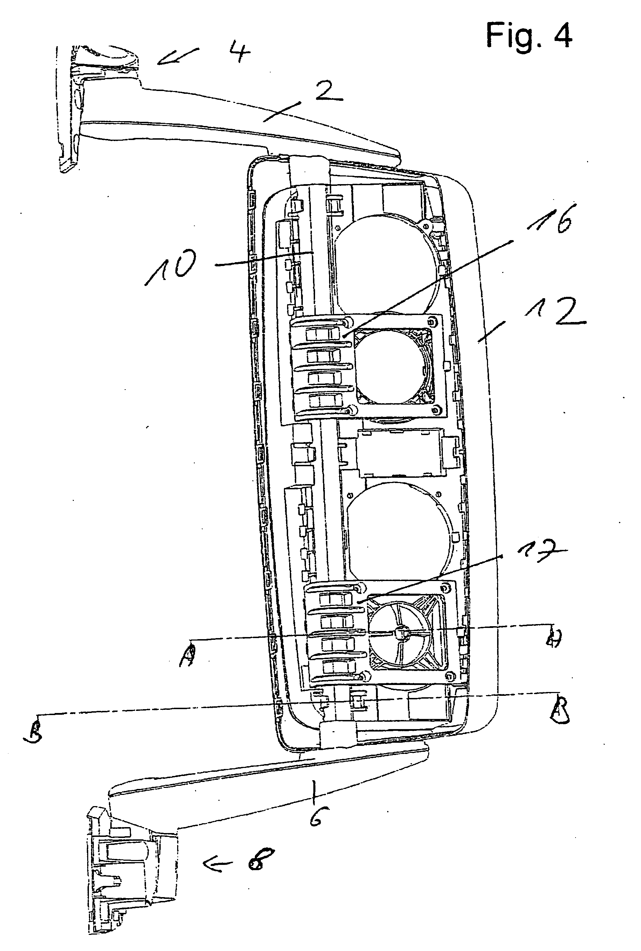

Fig. 3 und 4 zeigen entgegen der Fahrtrichtung einen linken Außenspiegel mit einer Spiegelhalterung nach Fig. 1 bzw. 2, d. h. an dem Spiegelkopfhaltearm 10 ist ein Spiegelkopf 12 montiert. In Fig. 3 ist der Spiegelkopf 12 mit einer Abdeckung 14 versehen, Fig. 4 zeigt den Spiegelkopf 12 ohne Abdeckung 14. Wie aus Fig. 4 zu ersehen ist, ist der Spiegelkopf 12 über eine obere und eine untere Klemmverbindung 16 bzw. 17 mit dem Aluminium-Strangpressprofil bzw. dem Spiegelkopfhaltearm 10 verbunden. Hierfür eignet sich insbesondere eine Klemmverbindung, wie sie aus der EP 1 020 326 B1 bekannt ist.

Wie aus den Figuren 1, 2, 5a und 5b zu ersehen ist, ist das Strangpressprofil 10 ein Hohlprofil und weist an der Außenseite eine erste und eine zweite Längsnut 18 und 19 auf, die in einen Winkelabstand von etwa 150° zueinander angeordnet sind. Durch die beiden Längsnuten 18 und 17 wird die Winkelstellung des Spiegelkopfhaltearms 10 relativ zu dem oberen und dem unteren Haltearm 2, 6 festgelegt. Durch den Form- und Reibschluss zwischen Spiegelkopfhaltearm 10 und den beiden Haltearmen 2, 6 wird das notwendige Drehmoment von dem Spiegelkopfhaltearm 10 auf die beiden Haltearme 2, 6 übertragen.

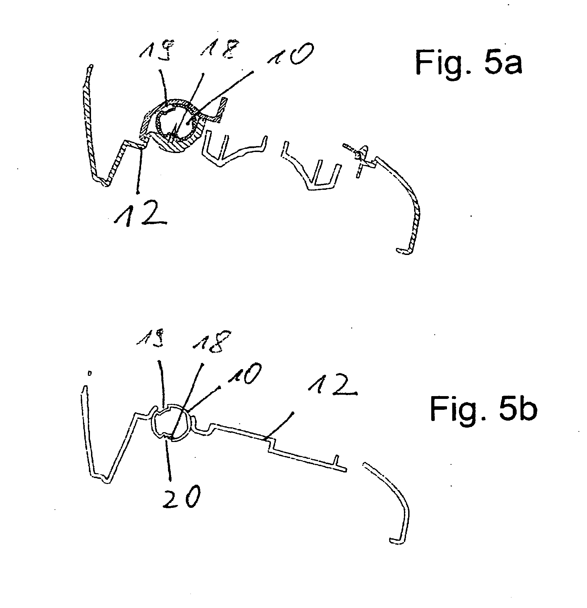

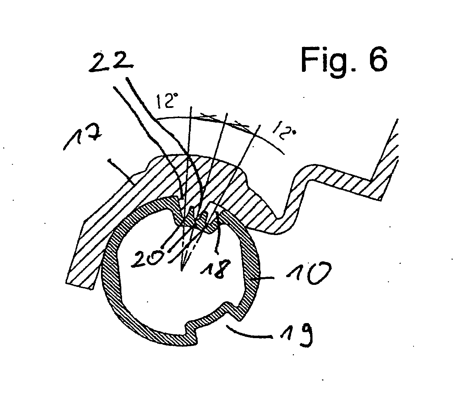

Zur genauen Festlegung der Winkelstellung des Spiegelkopfes 12 relativ zu dem Strangpressprofil 10 weist eine der beiden Längsnuten 18 und 19, hier die Längsnut 18, mehrere in Längsrichtung in der Längsnut 18 verlaufende Rillen 20 auf - siehe Fig. 5a, 5b und 6. Die Teilung dieser Längsrillen 20 bestimmt den kleinstmöglich einstellbaren Versatz des Spiegelkopfes 12 an den Spiegelkopfhaltearm 10. In die Längsrillen 20 greifen komplementär geformte Vorsprünge 22 ein, die in der oberen und der unteren Klemmverbindung 16 und 17 vorgesehen sind. Durch diesen Formschluss wird die Winkellage des Spiegelkopfes 12 genau festgelegt. Wie aus Fig. 6 zu ersehen ist, beträgt in der beispielhaften Ausführungsform der Versatz zwischen zwei Längsrillen 20 12°. Natürlich sind auch andere Teilungen bei entsprechender Ausgestaltung der Längsrillen 20 und der komplementär geformten Vorsprünge 22 möglich.

### Bezugszeichenliste:

- 2: oberer Haltearm
- 4: oberes Befestigungselement
- 6: untere Haltearm
- 8: unteres Befestigungselement
- 10: Spiegelkopfhaltearm
- 12: Spiegelkopf
- 14: Spiegelkopfabdeckung
- 16: obere Klemmverbindung
- 17: untere Klemmverbindung
- 18: erste Längsnut
- 19: zweite Längsnut
- 20: Längsrillen
- 22: komplementäre Vorsprünge

## Patentansprüche

1. Linke oder rechte Spiegelhalterung für Fahrzeugaußenspiegel mit, einem oberen Haltearm (2), der ein oberes Befestigungselement (4) zur Befestigung an einem Fahrzeug aufweist,
einem unteren Haltearm (6), der ein unteres Befestigungselement (8) zur Befestigung an dem Fahrzeug aufweist, und
einem den oberen und unteren Haltearme (2, 6) verbindenden Spiegelkopfhaltearm (10),
wobei der obere Haltearm (2), der Spiegelkopfhaltearm (10) und der untere Haltearm (6) fest oder lösbar miteinander verbunden sind, wobei der obere Haltearm (2) einer linken Spiegelhalterung identisch mit dem unteren Haltearm (6) einer rechten Spiegelhalterung ist, und der untere Haltearm (6) einer linken Spiegelhalterung identisch mit dem oberen Haltearm (2) einer rechten Spiegelhalterung ist,
**dadurch gekennzeichnet,**
**dass** das obere und untere Befestigungselement (4, 8) als Rastgelenk zur Veränderung der Winkelstellung der Spiegelhalterung relativ zum Fahrzeug ausgebildet ist.

2. Spiegelhalterung nach Anspruch 1. **dadurch gekennzeichnet, dass** der obere und der untere Haltearm (2, 6) identisch sind.

3. Spiegelhalterung nach Anspruch 1 oder 2, **dadurch gekennzeichnet, dass** der obere und der untere Haltearm (2, 6) geschwungen sind.

4. Spiegelhalterung nach einem der vorhergehenden Ansprüche, **dadurch gekennzeichnet, dass** der obere und der untere Haltearm (2, 6) aus Kunststoff bestehen.

5. Spiegelhalterung nach einem der vorhergehenden Ansprüche, **dadurch gekennzeichnet, dass** der Spiegelkopfhaltearm durch Form-oder Reibschluss an dem oberen und/oder dem unteren Haltearm befestigt ist.

6. Spiegelhalterung nach einem der vorhergehenden Ansprüche, **dadurch gekennzeichnet, dass** der Spiegelkopfhaltearm (10) aus Metall besteht.

7. Spiegelhalterung nach einem der vorhergehenden Ansprüche, **dadurch gekennzeichnet, dass** der Spiegelkopfhaltearm (10) ein Strangpressprofit ist.

8. Spiegelhalterung nach Anspruch 7, **dadurch gekennzeichnet, dass** der Spiegelkopfhaltearm (10) ein Hohlprofil ist.

9. Spiegelhalterung nach Anspruch 7 oder 8, **dadurch gekennzeichnet, dass** der Spiegelkopfhaltearm (10) ein Aluminium-Strangpressprofil ist.

10. Spiegelhalterung nach einem der vorhergehenden Ansprüche 7 bis 9, **dadurch gekennzeichnet, dass** das Strangpressprofil (10) wenigstens eine erste Längsnut (18, 19) aufweist, die eine bestimmte Winkelstellung des Spiegelkopfhaltearms (10) relativ zum oberen und/oder unteren Haltearm (2, 6) festlegt

11. Spiegelhalterung nach Anspruch 10, **dadurch gekennzeichnet, dass** das Strangpressprofil (10) wenigstens eine zweite Längsnut (19) auf weist, die nicht punksymmetrisch zu der ersten Längsnut (18) ausgebildet ist.

12. Spiegelhalterung nach Anspruch 10 oder 11, **dadurch gekennzeichnet, dass** in der wenigstens einen Längsnut (18, 19) eine Mehrzahl von Längsrillen (20) eingebracht sind.

13. Spiegelhalterung nach Anspruch 11, **dadurch gekennzeichnet, dass** die Mehrzahl von Längsrillen (20) unterschiedliche Winkelstellungen eines an dem Spiegelkopfhaltearm (10) befestigbaren Spiegelkopfes (12) relativ zur Spiegelhalterung festlegen.

14. Linker oder rechter Fahrzeugaußenspiegel mit einer Spiegelhalterung nach einem der vorhergehenden Ansprüche an dem wenigstens ein Spiegelkopf 12) montiert ist.

## Claims

1. A left- or right-side mirror mount for a vehicle external mirror, comprising an upper support arm (2) including an upper fastening member (4) for fastening to a vehicle,
a lower support arm (6) including a lower fastening member (8) for fastening to the vehicle, and
a mirror head support arm (10) connecting the upper and lower support arms (2, 6), wherein the upper support arm (2), the mirror head support arm (10), and the lower support arm (6) are fixedly or releasably connected to each other,
wherein the upper support arm (2) of a left-side mirror mount is identical with the lower support arm (6) of a right-side mirror mount, and
the lower support arm (6) of a left-side mirror mount is identical with the upper support arm (2) of a right-side mirror mount,
**characterized in that**
the upper and the lower fastening member (4, 8) are each configured as an indexing articulation for altering the angular position of the mirror mount relative to the vehicle.

2. The mirror mount according to claim 1, **characterized in that** the upper and lower support arms (2, 6) are identical.

3. The mirror mount according to claim 1 or 2, **characterized in that** the upper and lower support arms (2, 6) are curved.

4. The mirror mount according to any one of the preceding claims, **characterized in that** the upper and lower support arms (2, 6) are made of plastics

5. The mirror mount according to any one of the preceding claims, **characterized in that** the mirror head support arm is fastened by form-fit or frictionally to the upper and/or lower support arm.

6. The mirror mount according to any one of the preceding claims, **characterized in that** the mirror head support arm (10) is made of metal.

7. The mirror mount according to any one of the preceding claims, **characterized in that** the mirror head support arm (10) is an extruded profile.

8. The mirror mount according to claim 7, **characterized in that** the mirror head support arm (10) is a hollow profile.

9. The mirror mount according to claim 7 or 8, **characterized in that** the mirror head support arm (10) is an extruded aluminum profile.

10. The mirror mount according to any one of the preceding claims 7 to 9, **characterized in that** the extruded profile (10) includes at least one first longitudinal groove (18, 19) determining a defined angular position of the mirror head support arm (10) relative to the upper and/or lower support arm (2, 6).

11. The mirror mount according to claim 10, **characterized in that** the extruded profile (10) includes at least one second longitudinal groove (19) which is not centrically symmetric relative to the first longitudinal groove (18).

12. The mirror mount according to claim 10 or 11, **characterized in that** a plurality of longitudinal flutings (20) are provided in the at least one longitudinal groove (18, 19).

13. The mirror mount according to claim 11, **characterized in that** the plurality of longitudinal flutings (20) determine different angular positions of a mirror head (12), which is adapted to be fastened to the mirror head support arm (10), relative to the mirror mount.

14. A left- or right-side vehicle external mirror comprising a mirror mount according to any one of the preceding claims, on which at least one mirror head (12) is mounted.

## Revendications

1. Fixation de miroir gauche ou droite, pour rétroviseur extérieur de véhicule, avec
un bras de maintien supérieur (2), présentant un élément de fixation supérieur (4) pour assurer la fixation à un véhicule,
un bras de maintien inférieur (6), présentant un élément de fixation inférieur (8) pour assurer la fixation au véhicule, et
un bras de maintien de tête de rétroviseur (10) reliant les bras de maintien supérieur et inférieur (2, 6),
le bras de maintien supérieur (2), le bras de maintien de tête de rétroviseur (10) et le un bras de maintien inférieur (6) étant reliés ensemble de manière rigide ou désolidarisable,
le bras de maintien supérieur (2) d'une fixation de miroir gauche étant identique au bras de maintien inférieur (6) d'une fixation de miroir droite, et
le bras de maintien inférieur (6) d'une fixation de miroir gauche étant identique au bras de maintien supérieur (2) d'une fixation de miroir droite,
**caractérisée en ce que**
les éléments de fixation supérieur et inférieur (4, 8) sont réalisé sous forme d'articulation à crans, de manière à modifier la position angulaire de la fixation de miroir par rapport au véhicule.

2. Fixation de miroir selon la revendication 1, **caractérisée en ce que** les bras de maintien supérieur et inférieur (2, 6) sont identiques.

3. Fixation de miroir selon la revendication 1 ou 2, **caractérisée en ce que** les bras de maintien supérieur et inférieur (2, 6) sont arqués.

4. Fixation de miroir selon l'une des revendications précédentes, **caractérisée en ce que** les bras de maintien supérieur et inférieur (2, 6) sont en matière synthétique.

5. Fixation de miroir selon l'une des revendications précédentes, **caractérisée en ce que** le bras de maintien de tête de rétroviseur (10) est fixé, par une liaison à ajustement de forme ou à friction, aux bras de maintien supérieur et/ou inférieur.

6. Fixation de miroir selon l'une des revendications précédentes, **caractérisée en ce que** le bras de maintien de tête de rétroviseur (10) est en métal.

7. Fixation de miroir selon l'une des revendications précédentes, **caractérisée en ce que** le bras de maintien de tête de rétroviseur (10) est un profilé d'extrusion.

8. Fixation de miroir selon la revendication 7, **caractérisée en ce que** le bras de maintien de tête de rétroviseur (10) est un profilé creux.

9. Fixation de miroir selon la revendication 7 ou 8, **caractérisée en ce que** le bras de maintien de tête de rétroviseur (10) est un profilé d'extrusion en aluminium.

10. Fixation de miroir selon l'une des revendications précédentes, **caractérisée en ce que** le bras de maintien de tête de rétroviseur (10) présente au moins une première rainure longitudinale (18, 19), fixant une position angulaire déterminée du bras de maintien de tête de rétroviseur (10) par rapport aux bras de maintien supérieur et/ou inférieur (2, 6).

11. Fixation de miroir selon la revendication 10, **caractérisée en ce que** le bras de maintien de tête de rétroviseur (10) présente au moins une deuxième rainure longitudinale (19), réalisée sans répondre à une symétrie ponctuelle par rapport à la première rainure longitudinale (18).

12. Fixation de miroir selon la revendication 10 ou 11, **caractérisée en ce qu'**une pluralité de cannelures longitudinales (20) sont creusées dans la au moins une rainure longitudinale (18, 19).

13. Fixation de miroir selon la revendication 11, **caractérisée en ce que** la pluralité de cannelures longitudinales (20) fixent des positions angulaires différentes d'une tête de rétroviseur, susceptible d'être fixée sur le bras de maintien de tête de rétroviseur (10), par rapport à la fixation de miroir.

14. Rétroviseur extérieur gauche ou droit de véhicule, avec une fixation de miroir selon l'une des revendications précédentes, monté sur la au moins une tête de rétroviseur (12).
